# EUROPÄISCHE PATENTSCHRIFT

(11) **EP 2 210 963 B1**
(45) Veröffentlichungstag und Bekanntmachung des Hinweises auf die Patenterteilung: **28.09.2011**
(21) Anmeldenummer: 10000493.6
(22) Anmeldetag: 20.01.2010
(51) Int. Cl.: C22B 1/244, C22B 1/245, C22B 1/248, C22B 7/02, C22B 1/24

(54) **Walzenzunderbrikettierung unter Verwendung von Papierschlamm**
Rolling mill scale briquetting with use of paper pulp
Briquetage de battitures en utilisant une pulpe à papier

(30) Priorität: 21.01.2009 DE 102009005604
(43) Veröffentlichungstag der Anmeldung: 28.07.2010
(73) Patentinhaber: RHM Rohstoff-Handelsgesellschaft mbH, 45478 Mühlheim a. d. Ruhr (DE)
(72) Erfinder: Meynerts, Udo, 45478 Mülheim a.d. Ruhr (DE); Maurer, Michael, 42799 Leichtlingen (DE); Freitas Seabra de Rocha, Sualo Henrique. Dr.-Ing., 52134 Herzogenrath (DE); Wirtgen, Christian, Dr.-Ing., 4710 Loutzen (BE)
(74) Vertreter: Isfort, Olaf

(56) Entgegenhaltungen:
- WO-A1-01/94651
- DE-A1- 2 531 457
- DE-A1- 2 605 215
- DE-A1- 3 117 184
- US-A- 3 960 543
- US-A- 4 917 723
- DATABASE WPI Week 198229 Thomson Scientific, London, GB; AN 1982-60996E XP002576734 & SU 852 952 A1 (FERROUS METALLURGY INST) 7. August 1981 (1981-08-07)

## Beschreibung

Die Erfindung betrifft ein Verfahren zur Agglomeration von eisenoxidhaltigen Reststoffen.

Bei der Stahlerzeugung fallen unterschiedliche Reststoffe an, die häufig signifikante Mengen wertvoller Stoffe enthalten, insbesondere Eisen in Form von Eisenoxiden. Derartige eisenoxidhaltige Reststoffe sind z. B. Filterstäube aus Stahlwerken und Hochöfen, Schlämme aus Gasreinigungen und insbesondere Zunder oder Walzenzunder. Hierbei handelt es sich um bei der Metallverarbeitung entstehenden Materialverlust auf der Metalloberfläche, der auf die Einwirkung von Sauerstoff bei hohen Temperaturen zurückzuführen ist. Beim Walzenzunder z. B. handelt es sich um die Oxidationsschichten, die beim Walzen und Schmieden von Stahl sowie beim Ziehen von Draht anfallen. Ähnliche Abfälle entstehen auch beim Stranggießen. Die Zunderschicht ist für den Walzprozess nachteilig, weshalb sie üblicherweise mit Hilfe eines Hochdruckwasserstrahles entfernt wird. Das Abwasser, das den feinkörnigen Walzenzunder enthält, sammelt sich unterhalb des Walzgerüstes in der Zundergrube, in der sich ein Schlamm absetzt, der allerdings neben dem Metalloxid und Wasser weitere Verunreinigungen, insbesondere in Form von Fetten und Ölen enthält.

Zunder oder Walzenzunder weist meist einen hohen Eisengehalt von ca. 70 % auf, wobei es sich um eine Mischung verschiedener Eisenoxide in Form von FeO (60 bis 66 %), Fe₃O₄ (30 bis 34 %) und Fe₂O₃ (2 bis 5 %) handelt. Daneben sind geringe Mengen von NE-Metalloxiden und Siliciumdioxid enthalten.

In Deutschland fallen bei der Erzeugung von Stahl durchschnittlich 56,2 kg pro Tonne Rohstahl an Rückständen an. Bei der Erzeugung über die Sauerstoffroute fallen 61,2 kg pro Tonne Rohstahl, bei dem Weg über den Elektrolichtbogenofen 37,6 kg pro Tonne Rohstahl an (Institut für Baustoff-Forschung FEhS, 2005). Die Rückstände setzen sich wie folgt zusammen

| Route | Hochofen | Elektrolichtbogen |
|---|---|---|
| Rückstände gesamt | 61,2 kg/t_{Rohstahl} | 37,6 kg/t_{Rohstahl} |
| Filterstäube | 39,9 kg/t_{Rohstahl} | 20,7 kg/t_{Rohstahl} |
| Schlämme | 6,1 kg/t_{Rohstahl} | - |
| Zunder | 10,9 kg/t_{Rohstahl} | 10,5 kg/t_{Rohstahl} |
| Walzenzunderschlamm | 4,3 kg/t_{Rohstahl} | 6,5 kg/t_{Rohstahl} |

In der Vergangenheit wurden die bei der Stahlerzeugung anfallenden Reststoffe häufig auf Deponien endgelagert, was jedoch aus ökologischer Sicht und im Hinblick auf sich ständig verschärfende Grenzwerte für Umweltbelastungen problematisch ist. Diese Vorgehensweise ist jedoch vor dem Hintergrund des in Deutschland abfallrechtlich begrenzten und endlichen Deponievolumens (übertägig wie untertätig) lediglich eine begrenzte Übergangslösung, die langfristig nicht verfügbar ist. Des Weiteren geht ein großer Teil des Walzenzunders in die Zementindustrie. Aufgrund des hohen Eisenanteils ist jedoch das Recycling von eisenoxidhaltigen Reststoffen wie Zunder und Walzenzunder auch aus wirtschaftlichen Gründen von Interesse.

Grundsätzlich ist das Recycling von Reststoffen in Sinteranlagen möglich. Gerade bei Walzenzunder stellt sich jedoch das Problem, dass der Restölgehalt in Sinteranlagen weniger als 0,3 Gew.-% betragen muss, da anderenfalls die Gefahr eines Schwelbrandes im Elektrofilter besteht. Walzenzunder mit hohem Restölgehalt kann daher nicht unmittelbar in einer Sinteranlage weiterverarbeitet werden. Eine Vorabentölung im Drehrohrofen ist möglich, wünschenswert wäre jedoch, die Reststoffe direkt wieder im Elektroofen in den Stahlerzeugungsprozess einbringen zu können.

Die direkte Wiederverwertung von Walzenzunder bei der Stahlherstellung im Elektrolichtbogenofen ist jedoch nicht möglich, da die Eisenoxidpartikel mit dem Abgas ausgetragen bzw. die Schlackenmenge erhöhen würden, was sich ungünstig auf den Energieverbrauch und die Umwelt auswirkt. Aus diesem Grund ist eine Vorabagglomeration der Reststoffe in Form einer Brikettierung oder Pelletierung sowie die Zugabe eines Kohlenstoffträgers bzw. Reduktionsmittels/Bindemittels notwendig. Aus dem Stand der Technik sind verschiedene Verfahren zur Brikettierung von Zunder und Walzenzunder bekannt, beispielsweise mit Hilfe von Zement (DE 23 60 595), Kalkhydrat und Melasse (EP 0 630 980 A1) oder Silicaten (WO 98/40523 A1). Es hat sich jedoch herausgestellt, dass auf diese Weise hergestellte Briketts keine ausreichende Festigkeit aufweisen. Eine ausreichende Festigkeit ist jedoch von hoher Bedeutung bei der Einbringung der Agglomerate in einen Elektrolichtbogenofen, damit die Agglomerate tief in den Prozess bzw. die Schmelze eindringen können, d. h. auch bei hoher Temperatur müssen die Agglomerate dem Temperaturschock und den mechanischen Belastungen aufgrund des Kontakts mit nicht geschmolzenen Schrottteilen widerstehen, um das Stahlbad möglichst unzerstört erreichen zu können. Die Agglomerate müssen so beschaffen sein, dass sie die auf der Oberfläche der Stahlschmelze befindliche Schlackenschicht durchdringen. Anderenfalls würde der frühe Zerfall des Agglomerats zurück in den staubförmigen. Zustand zu einer Erhöhung der Abgasstaubmenge und/oder Schlackenmenge führen. Daneben ist eine hohe Festigkeit auch von Vorteil, damit die Agglomerate sonstigen Beanspruchungen, insbesondere bei Transport, Lagerung und Zufuhr in den Elektrolichtbogenofen Stand halten. Darüber hinaus dürfen die für die Agglomeration erforderlichen Bindemittel weder das Stahlbad noch die Schlackenschicht negativ beeinflussen. Schließlich muss beachtet werden, dass beim Aufschmelzen der Agglomerate möglichst keine Schadstoffe entstehen.

Vorteilhaft ist darüber hinaus, wenn die Agglomerate eine hohe Dichte (möglichst > 2,2 g/cm³) aufweisen, um durch die Schlacke zu gelangen und anschließend die Oberfläche des Stahlbades zu erreichen. Das Agglomerat soll an bzw. in der Oberfläche seine metallischen Anteile so direkt wie möglich in die Schmelze abgeben.

Aus der US 2,865,731 ist auch bereits ein Verfahren bekannt, bei dem Zellulosematerialien verwendet werden, um fein verteiltes Eisenoxid, das beim Waschen von Hämatit anfällt, zu brikettieren. Dabei werden typischerweise 12 bis 18 amerikanische Pfund Zellulosefasern pro Tonne Eisenoxidfeinerz eingesetzt. Es hat sich jedoch herausgestellt, dass auf diese Weise hergestellte Briketts nicht die Anforderungen an Agglomerate erfüllen, wie sie zum Wiedereinbringen in die Stahlerzeugung mit Hilfe eines Elektrolichtbogenofens notwendig sind.

Aus der WO 01/94651 A1 ist ein Verfahren bekannt, bei der Agglomerate aus eisenhaltigen Reststoffen und Zellulosematerial hergestellt werden. Die Brikettierung findet bei Raumtemperatur statt, anschließend werden die Agglomerate stark erhitzt auf eine Temperatur zwischen 1.000 und 1 550 °C.

Gemäß der DE 26 05 215 A1 sollen Briketts aus Eisenspänen etc hergestellt werden, wobei als Binder Zement zum Einsatz kommt. Zusätzlich können als Binder auch Fasermaterialien wie Papier, Textil, Abfall oder Torf verwendet werden. Der Anteil der Fasermaterialien beträgt 0,5-3 %.

Gemaß der DE 2 531 457 A1 findet eine Brikettierung von eisenhaltigen Abfallstoffen wie Zunder mit Papierbreiabwasser statt, wobei der Anteil am Papierbreiabwasser 1-5 Gew.-% beträgt Der Wassergehalt liegt zwischen 8 und 20 Gew.-%.

Heißbrikettierungen sind im Stand der Technik ebenfalls grundsätzlich bekannt, beispielsweise aus der DE 3 117 184 A1 und der US 3 960 543. Gemaß der erstgenannten Druckschrift werden vornehmlich aus Metall bestehende Presslinge mit Steinkohle als Bindemittel, gemäß der zweitgenannten Druckschrift Presslinge aus Metalloxiden mit Kohle und Bitumen hergestellt.

In der SU 852 952 wird die Herstellung von kohlenstoffhaltigen Eisenerzbriketts beschrieben, die bei einer Temperatur von 275 °C gepresst werden.

In der US 4 917 723 wird ein Verfahren zur Rückgewinnung von Metallen offenbart. Hierbei werden eisenhaltige Reststoffe agglomeriert und einem Schmelzofen zugeführt. Es folgt eine Verflüchtigung von Nicht-Eisenmetallen, eine Rückgewinnung, eine erneute Agglomeration und erneutes Schmelzen, bis schließlich der Gehalt des rückzugewinnenden Metalls ausreichend hoch ist.

Ausgehend vom vorbeschriebenen Stand der Technik stellt sich die Aufgabe, ein Verfahren zur Erzeugung von Agglomeraten von eisenoxidhaitigen Reststoffen zur Verfügung zu stellen, mit dessen Hilfe sich Agglomerate herstellen lassen, die eine so hohe Festigkeit aufweisen, dass sie für die Wiederverwertung in einem Elektrolichtbogenofen geeignet sind.

Überraschend hat sich herausgestellt, dass derartige Agglomerate von eisenoxidhaltigen Reststoffen durch ein Verfahren herstellbar sind, bei dem Papierschlamm und ggf die Reststoffe zerkleinert werden und eine Mischung aus trockenen Reststoffen und trockenem Papierschlamm brikettiert wird, wobei der Wassergehalt der trockenen Reststoffe und des trockenen Papierschlamms jeweils weniger als 5 Gew -% betragt, die Mischung 15-35 Gew.-% trockenen Papierschlamm enthält und die Brikettierung bei einer Temperatur zwischen 70 und 350 °Cdurchgeführt wird.

Bei der Untersuchung verschiedener Bindemittel hat sich herausgestellt, dass verschiedene herkömmliche Bindemittel nicht die an sie gestellten Voraussetzungen erfüllen. Als besonders geeignet hat sich jedoch

Papierschlamm, d. h. Faserstoffe auf Zellulosebasis herausgestellt. Dabei ist es allerdings unabdingbar, den Papierschlamm vor der Brikettierung auf einen niedrigen Wassergehalt zu bringen, da sich herausgestellt hat, dass ein zu hoher Wasseranteil die Kompaktierung erheblich behindert. Im Rahmen dieser Beschreibung werden unter trockenem Papierschlamm bzw. trockenen Reststoffen Papierschlamm bzw. Reststoffe mit niedrigem Wassergehalt von weniger als 5 Gew.-% verstanden, eine vollständige Entfernung des Wassers ist i. d. R. weder erforderlich noch möglich.

Typischerweise weist Papierschlamm im Anlieferungszustand einen Wassergehalt von ca. 57 Gew.-% auf. Auch die eisenoxidhaltigen Reststoffe verfügen häufig über einen nicht akzeptablen Wassergehalt, insbesondere wenn es sich um Zunder oder Walzenzunder handelt, bei dem der Wassergehalt durchschnittlich ca. 5 Gew.-% beträgt. Der Papierschlamm und ggf. die Reststoffe können beispielsweise bei einer Temperatur von 85°C über einen Zeitraum von 24 Stunden getrocknet werden. Dabei wird aus dem Papierschlamm ein flockiger Stoff erhalten, der weiter zerkleinert wird. Ebenfalls sinnvoll ist häufig die Zerkleinerung der Reststoffe selbst.

Erfindungsgemäß hat sich überraschend herausgestellt, dass durch eine Heißbrikettierung die Stabilität der Agglomerate deutlich verbessert wird. Hinsichtlich der Festigkeit wurden die Briketts mittels des sog. Brazilian Test untersucht, der für zylindrische Prüfkörper konzipiert ist. Dabei können Briketts von verschiedenen Dimensionen und Schlankheit (Verhältnis der Höhe zum Durchmesser) verglichen werden. Untersucht wird die Spaltzugfestigkeit. Bei durch Heißbrikettierung erhaltenen Briketts wurde eine Zugfestigkeit σ_{bz} von 3,2 MPa gemessen. Darüber hinaus weisen die so erhältlichen Briketts auch eine ausreichend hohe Dichte von mehr als 2,5 g/cm³ auf.

Zum Vergleich wurden ähnliche Versuche mit anderen Bindemitteln unternommen. Dabei wurde festgestellt, dass Briketts mit 10 % Zement nach einer Aushärtung von 28 Tagen lediglich eine maximale Spaltzugfestigkeit von 0,1 bis 0,4 MPa aufweisen, was als nicht ausreichend angesehen werden muss. Hinzu kommt, dass die Briketts selbstreduzierend sein, d. h. genügend Reduktionsmittel enthalten sollten, um die maximalen Anteile an Eisenoxid im metallischen Zustand bei der Wiederverwertung in das Stahlbad zu überführen. Bei der Verwendung von Zement als Bindemittel muss jedoch ein zusätzliches Reduktionsmittel hinzugesetzt werden, damit die Mischung insgesamt selbstreduzierend wirkt, beispielsweise Holzkohle oder Koksgruß. Dies jedoch führt zu einer weiteren Verschlechterung der Spaltzugfestigkeit.

Eine mögliche Ursache der schlechten Ergebnisse mit Zement könnte darin begründet sein, dass dieses Bindemittel sowie der notwendigerweise vorliegende Wassergehalt zu einer weiteren Oxidation des Eisens führt, beispielsweise durch Oxidation von FeO zu Fe₂O₃ oder durch Ausbildung von Hydraten wie Goethit. Die neue Oxidationsstufe sowie die Hydrate schwächen die Bindung zwischen dem Zement und den Oberflächen der Reststoffpartikel, wodurch die Festigkeit reduziert wird.

Auch bei der Verwendung von Kalkhydrat als Bindemittel konnten nur unzureichende Ergebnisse erzielt werden. Nach 28tägiger Aushärtung betrug die Festigkeit nur 0,3 bis 0,5 MPa. Darüber hinaus wiesen die Briketts nur eine unzureichende Dichte von ca. 1,1 g/cm³ auf. Die Zugabe von Melasse zum Kalkhydrat konnte die Festigkeit der Briketts nicht deutlich erhöhen.

Auch die Verwendung von Volclay ergab keine Briketts ausreichender Festigkeit. Bei Verwendung von 5 Gew.-% Volclay betrug diese 0,60 MPa, bei Verwendung von 10 Gew.-% Volclay 0,90 MPa. Durch Langzeitaushärtung konnte die Festigkeit nicht nennenswert verbessert werden. Die Ursache wird, ähnlich wie beim Zement, auf die weitere Oxidation des Eisenoxids zurückgeführt.

Wie bereits erwähnt, handelt es sich bei den eisenoxidhaltigen Reststoffen erfindungsgemäß insbesondere um Zunder oder Walzenzunder, wie er beim Stranggießen und Walzen von Stahl oder anderen Verfahren anfällt. Im Folgenden wird hier der Begriff Walzenzunder verwendet, wobei jedoch klargestellt sei, dass im Kontext dieser Erfindung hierunter sämtliche Arten von Zunder/Walzenzunder zu verstehen sind. Da der Walzenzunder üblicherweise mit Hilfe eines Hochdruckwasserstrahls (250 bis 280 bar) von der Metalloberfläche entfernt wird, weist der Walzenzunder zunächst in der Regel einen hohen Wassergehalt von ca. 5 Gew.% auf. Durch die Trocknung konnten die Brikettiereigenschaften deutlich verbessert werden.

Bei Verwendung von nicht aufbereitetem Papierschlamm, der typischerweise einen Wassergehalt von ca. 57 Gew.-% aufweist, ist die Trocknung ebenfalls von hoher Bedeutung. Nach der Trocknung wird der Papierschlamm zu einem flockigen Stoff mit einer Korngröße < 20 mm. Sowohl der getrocknete Papierschlamm als auch die getrockneten eisenoxidhaltigen Reststoffe müssen einen Wassergehalt von weniger als 5 Gew.-% aufweisen. Bei Verwendung von aufbereitetem Papierschlamm, dem bereits der größte Teil des Wassers entzogen wurde, kann eine zusätzliche Trocknung allerdings auch entbehrlich sein.

Aus dem getrockneten und zerkleinerten Papierschlamm und den in der Regel ebenfalls getrockneten und zerkleinerten eisenoxidhaltigen Reststoffen wird eine Mischung hergestellt. Besonders bevorzugt sind 65 bis 85 Gew.-% Reststoffe und 15 bis 35 Gew.-% getrockneter Papierschlamm. Gute Ergebnisse hinsichtlich der Festigkeit lassen sich erzielen, wenn der Papierschlamm-Anteil größer als 20 Gew.-% und ggf. größer als 26 Gew.-% ist.

Bei der Verwendung von lediglich getrocknetem, nicht jedoch zerkleinertem Papierschlamm konnte eine Segregation (Entmischung) während der Mischung mit den eisenoxidhaltigen Reststoffen beobachtet werden. Diese Segregationsprobleme werden durch Zerkleinerung der Papierschlammflocken minimiert. Die Zerkleinerung sollte soweit erfolgen, dass 90 Gew.-% des getrockneten und zerkleinerten Papierschlamms eine Korngröße von weniger als 1 mm aufweisen.

Eine Zerkleinerung sollte auch im Hinblick auf die eisenoxidhaltigen Reststoffe, insbesondere den Walzenzunder durchgeführt werden. Walzenzunder in seiner ursprünglichen Form hat eine relativ breite Korngrößenverteilung, d. h. 50 Gew.-% der Partikel sind größer als 0,7 mm. Die großen Partikel sind sehr brüchig und stellen in den Agglomeraten die schwächste Stelle dar, da an diesen Stellen die Ausbildung von Rissen und Brüchen beginnt. Es hat sich herausgestellt, das Briketts aus feinerem Walzenzunder bei gleich bleibenden übrigen Brikettierparametem eine doppelt so hohe Festigkeit wie Briketts aus nicht aufbereitetem Walzenzunder zeigen. Die Zerkleinerung der Reststoffe sollte soweit erfolgen, dass für 90 Gew.-% des Reststoffes in der Mischung die Korngröße weniger als 1 mm beträgt. Idealerweise sollten weniger als 5 Gew.-% des Reststoffes eine Korngröße von mehr als 1 mm aufweisen.

Die Zerkleinerung kann insbesondere mit Hilfe einer Hammermühle durchgeführt werden, die die Reststoff- als auch die Papierschlammpartikel auf eine Größe von weniger als 1 mm bringen sollte. Unter Umständen ist jedoch auch eine Zerkleinerung auf eine Partikelgröße von max. 2 mm als ausreichend anzusehen. Neben der Verwendung einer Hammermühle kommen auch die Verwendung einer Schneidmühle, einer Kugelmühle oder einer Schwingmühle in Frage. Selbstverständlich ist es möglich, eisenoxidhaltige Reststoffe und Papierschlamm gemeinsam zu vermahlen, d. h. die Mischung kann bereits vor der Zerkleinerung hergestellt werden.

Die Brikettierung, d. h. die Herstellung von Agglomeraten, wobei erfindungsgemäß unter Agglomeraten nicht nur Briketts sondern auch beispielsweise Pellets zu verstehen sind, wird als Heißbrikettierung durchgeführt, wobei die Temperatur vorteilhafterweise zwischen 90 und 250°C, insbesondere zwischen 90 und 150°C beträgt. Die Brikettierung bei einer Temperatur von ca 140°C verlief ohne Vendebungsprobleme und hat sich als vorteilhaft herausgestellt. Der am meisten bevorzugte Temperaturbereich liegt somit zwischen 130 und 150°C. Die Agglomerate können z. B. einen Durchmesser zwischen 20 und 50 mm haben.

Gleichzeitig wird bei der Brikettierung ein Druck ausgeübt, der zwischen 10 und 500 MPa, bevorzugt zwischen 30 und 350 MPa und besonders bevorzugt zwischen 100 und 200 MPa beträgt. Bei Anwendung eines Drucks von ca. 150 MPa konnten befriedigende Ergebnisse erzielt werden.

Die Erwärmung der Mischung während der Heißbrikettierung kann auf unterschiedliche Weise erfolgen, beispielsweise mit Hilfe eines Gasstroms von Inertgas, Dampf, heißer Luft oder einer Mischung von Luft und Inertgas. Ebenfalls möglich ist eine Erhitzung mittels Wärmeübertragung, entweder durch unmittelbaren Kontakt oder durch Strahlung.

Der zu brikettierenden Mischung können ein oder mehrere zusätzliche Bindemittel zugefügt werden, beispielsweise flüssige Bindemittel, die bei erhöhter Temperatur stabil sind wie Natriumsilicat (Wasserglas) oder Aluminiumphosphat. Ebenfalls möglich ist der Zusatz von flüssigen Bindemitteln, die die Entmischung vermeiden. Beispiele hierfür sind Melasse oder Sulfitablauge. Eine weitere Möglichkeit besteht in dem Zusatz eines anorganischen Bindemittels zur Unterstützung der Entschwefelung. Hierbei handelt es sich z. B. um Kalkhydrat oder gebrannten Kalk. Geringe Mengen mineralischer Bindemittel können auch dazu dienen, eine verbesserte Hochtemperaturfestigkeit zu erreichen. Der Zusatz sollte in einer Menge von 1. bis 10 Gew.-% bezogen auf die gesamte Masse der Mischung erfolgen.

Der Brikettierungsmischung zur Herstellung der Agglomerate können weitere Stoffe zugesetzt werden, die bei der Herstellung von Legierungen zum Einsatz kommen. Der Zusatz erfolgt in Abhängigkeit von der gewünschten Zusammensetzung des Stahls, der unter Einsatz der agglomerierten eisenoxidhaltigen Reststoffe erzeugt werden soll. Die folgenden möglichen Zusatzstoffe können bis zu einem Anteil von 90 Gew.-% zugegeben werden:
- Aluminium
- Kupfer
- Mangan
- Magnesium
- Silicium
- Siliciumcarbid (SiC)
- Ferrochrom (FeCr)
- Ferromangan (FeMn)
- Ferrophosphor (FeP)
- Ferrosilicium (FeSi)
- Ferrosilicium-Magnesium (FeSiMg)
- Ferrotitan (FeTi)
- Chrom
- Nickel
- Ferronickel
- Molybdän
- Ferromolybdän
- Kobalt
- Ferrokobalt
- Zinkoxid
- Zirkonium
- Wolfram
- Vanadium
- Pulver aus Schnellarbeitsstahl (HSS)

Neben den bereits erwähnten Vorteilen hinsichtlich der erzielten Festigkeit und Dichte der mit Hilfe von Papierschlamm erzeugten Agglomerate ist als weiterer Vorteil der Verwendung von Papierschlamm der niedrige Preis zu nennen, da es sich bei Papierschlamm um ein Abfallprodukt handelt, das bei der Altpapierverwertung in großem Umfang anfällt. Zusätzlich sorgt der Papierschlamm dafür, dass die erzeugten Agglomerate bis zu einem gewissen Grade selbstreduzierend sind, so dass ein großer Anteil des Eisenoxids bei der Wiederverwertung in metallischem Zustand in das Stahlbad übergeht.

Neben dem oben beschriebenen, erfindungsgemäßen Verfahren betrifft die Erfindung auch ein Agglomerat, insbesondere ein Brikett oder Pellet, das durch das erfindungsgemäße Verfahren erhältlich ist.

Des Weiteren betrifft die Erfindung die Verwendung der Agglomerate im Rahmen der Stahlerzeugung, wobei die Agglomerate in einen Elektroofen, insbesondere einen Elektrolichtbogenofen eingebracht werden. Daneben ist auch die Verwertung in einem Induktionsofen, einem BOF/LD-Konverter, einem Hochofen, einem Schachtofen, einem Kupolofen oder einem Behandlungsgefäß, z. B einer Pfanne denkbar. Auf diese Weise werden die in den Reststoffen enthaltenen Wertstoffe, d. h. insbesondere das hienn als Eisenoxid gebundene Eisen wieder in den Stahlerzeugungsprozess eingebracht.

### Ausführungsbeispiel

Walzenzunder (Wassergehalt: 5 Gew.-%) und Papierschlamm (Wassergehalt: 57 Gew.-%) wurden für 24 Stunden im Trockenschrank bei einer Temperatur von 85°C getrocknet. Der Wassergehalt wurde auf diese Weise jeweils unter 5 Gew.-% gebracht. Der Papierschlamm lag nach der Trocknung als flockiger Stoff mit einer Korngröße von weniger als 20 mm vor.

Anschließend wurde sowohl der flockige Papierschlamm als auch der Walzenzunder mit Hilfe einer Hammermühle zerkleinert, so dass Walzenzunder- und Papierschlammpartikel erhalten wurden, bei denen die Korngröße für jeweils 90 Gew.-% des Bestandteils unter 1 mm lag.

Hierauf wurden der getrocknete und zerkleinerte Walzenzunder und der Papierschlamm in einem Verhältnis von 80:20 Gew.-% gemischt. Die Mischung wurde in eine zylindrische Matrize für die Heißbrikettierung eingebracht. Die Brikettierung erfolgte bei einem Druck von 150 MPa und bei einer Temperatur von 140°C. Die Festigkeit (Spaltzugfestigkeit) der erhaltenen Briketts wurde mit Hilfe des Brazilian Test überprüft. Man erhielt Briketts einer Festigkeit von 3,2 MPa und einer Dichte von > 2,5 g/cm³.

### Hochtemperaturfestigkeit

Die vorgenannten Briketts wurden unter Hochtemperaturbedingungen auf ihre Festigkeit geprüft. Unter einer Belastung von 1 MPa behalten diese Briketts bis zu einer Temperatur von ca. 1000 °C ihre ursprüngliche Form. Ab dieser Temperatur wird das Brikett deformiert, behält aber die Integrität als ein Agglomerat. Es erzeugt keinen Staub und trägt die wertvollen Eisen-Eisenheiten in den tieferen Teil des metallurgischen Reaktors.

### Schmelzverhalten

Die erzeugten Briketts (800 g) und Stahlblöcke C45 (4000 g) wurden in einem Induktionsofen erhitzt und aufgeschmolzen. Die Briketts haben die Erhitzung überstanden. Das Eisenoxid wurde zum metallischen Eisen reduziert und im Metallbad aufgelöst. Die Schmelze wurde zur Abkühlung in eine Kokille gegossen. Der gegossene Metallblock wies in seiner Zusammensetzung keine erhöhten Werte von unerwünschten Elementen (z. B. Schwefel, Kupfer, Zinn) auf.

## Patentansprüche

1. Verfahren zur Agglomeration von eisenoxidhaltigen Reststoffen wobei Papierschlamm und ggf. die Reststoffe zerkleinert werden und eine Mischung aus trockenen Reststoffen und trockenem Papierschlamm brikettiert wird,
**dadurch gekennzeichnet, dass** der Wassergehalt der trockenen Reststoffe und des trockenen Papierschlamms jeweils weniger als 5 Gew.-% beträgt, die Mischung 15 bis 35 Gew.-% trockenen Papierschlamm enthält und die Brikettierung bei einer Temperatur zwischen 70 und 350 °C durchgeführt wird.

2. Verfahren nach Anspruch 1, **dadurch gekennzeichnet, dass** es sich bei den eisenoxidhaltigen Reststoffen zumindest teilweise um Zunder oder Walzenzunder handelt.

3. Verfahren nach Anspruch 1 oder 2, **dadurch gekennzeichnet, dass** die Mischung 50 bis 95 Gew.-%, insbesondere 65 bis 85 Gew.-% Reststoffe enthält.

4. Verfahren nach einem der Ansprüche 1 bis 3, **dadurch gekennzeichnet, dass** die Mischung mehr als 20, insbesondere mehr als 26 Gew.-% trockenen Papierschlamm enthält.

5. Verfahren nach einem der Ansprüche 1 bis 4, **dadurch gekennzeichnet, dass** die Korngröße für 90 Gew.-% der Reststoffe in der Mischung weniger als 1 mm beträgt.

6. Verfahren nach einem der Ansprüche 1 bis 5, **dadurch gekennzeichnet, dass** die Korngröße für 90 Gew.-% des trockenen und zerkleinerten Papierschlamms weniger als 1 mm beträgt.

7. Verfahren nach einem der Ansprüche 1 bis 6, **dadurch gekennzeichnet, dass** die Brikettierung bei einer Temperatur zwischen 90 und 250°C, bevorzugt zwischen 90 und 150°C durchgeführt wird.

8. Verfahren nach einem der Ansprüche 1 bis 7, **dadurch gekennzeichnet, dass** die Brikettierung bei einem Druck von 10 bis 500 MPa, bevorzugt 30 bis 350 MPa und besonders bevorzugt 100 bis 200 MPa durchgeführt wird.

9. Verfahren nach einem der Ansprüche 1 bis 8, **dadurch gekennzeichnet, dass** der Mischung als zusätzliches Bindemittel Natriumsilicat, Aluminiumphosphat, Melasse, Sulfitablauge, Kalkhydrat und/oder gebrannter Kalk zugegeben wird.

10. Verfahren nach einem der Ansprüche 1 bis 9, **dadurch gekennzeichnet, dass** der Mischung Aluminium, Kupfer, Mangan, Magnesium, Silicium, Siliciumcarbid, Ferrochrom, Ferromangan, Ferrophosphor, Ferrosilicium, Ferrosilicium-Magnesium, Ferrotitan, Chrom, Nickel, Ferronickel, Molybdän, Ferromolybdän, Kobalt, Ferrokobalt, Zinkoxid, Zirkonium, Wolfram, Vanadium und/oder Pulver aus Schnellarbeitsstahl zugegeben wird.

11. Brikettiertes Agglomerat, insbesondere Brikett oder Pellet, erhältlich durch ein Verfahren nach einem der Ansprüche 1 bis 10, wobei der Gehalt an trockenen Papierschlamm (Faserstoffen auf Zellulosebasis) 15 bis 35 Gew.-% beträgt.

12. Verwendung von Agglomeraten nach Anspruch 11 im Rahmen der Stahlerzeugung, wobei die Agglomerate in einen Elektroofen, insbesondere einen Elektrolichtbogenofen, einen Induktionsofen, einen BOF/LD-Konverter, einen Schachtofen, einen Kupolofen, ein Behandlungsgefäß, insbesondere eine Pfanne, oder einen Hochofen eingebracht werden.

## Claims

1. A method for the agglomeration of iron-oxide-containing residual materials, wherein paper sludge and the residual materials, as the case may be, are ground and a mixture of dry residual materials and dry paper sludge is briquetted,
**characterized in that** the water content of the dry residual materials and the dry paper sludge are each less than 5% w/w, the mixture contains 15 to 35% w/w dry paper sludge and the briquetting operation is carried out at a temperature of between 70 and 350°C.

2. A method according to claim 1, **characterized in that** the iron-oxide-containing residual materials are, at least in part, scale or mill scale.

3. A method according to claim 1 or 2, **characterized in that** the mixture contains 50 to 95% w/w, in particular 65 to 85% w/w, of residual materials.

4. A method according to any of claims 1 to 3, **characterized in that** the mixture contains more than 20% w/w, in particular more than 26% w/w, of dry paper sludge.

5. A method according to any of claims 1 to 4, **characterized in that** 90% w/w of the residual material in the mixture has a grain size of less than 1 mm

6. A method according to any of claims 1 to 5, **characterized in that** 90% w/w of the dry and ground paper sludge has a grain size of less than 1 mm.

7. A method according to any of claims 1 to 6, **characterized in that** the briquetting operation is carried out at a temperature of between 90 and 250°C, preferably at a temperature of between 90 and 150°C.

8. A method according to any of claims 1 to 7, **characterized in that** the briquetting operation is carried out at a pressure of between 10 and 500 MPa, preferably at a pressure of between 30 and 350 MPa and especially preferably at a pressure of between 100 and 200 MPa.

9. A method according to any of claims 1 to 8, **characterized in that** sodium silicate, aluminum phosphate, molasses, spent sulfite solution, lime hydrate and/or calcined lime are added to the mixture as additional binders.

10. A method according to any of claims 1 to 9, **characterized in that** aluminum, copper, manganese, magnesium, silicon, silicon carbide, ferrochrome, ferromanganese, ferrophosphorus, ferrosilicon, ferrosilicon magnesium, ferrotitanium, chromium, nickel, ferronickel, molybdenum, ferromolybdenum, cobalt, ferro-cobalt, zinc oxide, zirconium, tungsten, vanadium and/or high-speed steel powder are added to the mixture.

11. A briquetted agglomerate, in particular a briquette or pellet, which can be produced by a process according to any of claims 1 to 10, wherein the content of dry paper sludge (fiber material with a cellulose base) amounts to 15 to 35% w/w.

12. The use of agglomerates according to claim 11 in a steelmaking process, wherein the agglomerates are charged into an electric furnace, in particular an electric arc furnace, an induction furnace, a BOF/LD converter, a shaft furnace, a cupola furnace, a treatment container, in particular a ladle, or a blast furnace.

## Revendications

1. Procédé d'agglomération de résidus contenant de l'oxyde de fer, dans lequel de la boue de papier et, le cas échéant, 1 les résidus, sont fragmentés et dans lequel un mélange de résidus secs et de boue de papier sèche est aggloméré en briquettes
**caractérisé en ce que**
la teneur en eau des résidus secs et de la boue de papier sèche est respectivement de moins de 5 % en poids, **en ce que** le mélange contient 15 à 35 % en poids de boue de papier sèche et **en ce que** l'agglomération en briquettes est effectuée à une température comprise entre 70 et 350 °C.

2. Procédé selon la revendication 1, **caractérisé en ce qu'**en tant que résidus contenant de l'oxyde de fer, il s'agit au moins en partie de mâchefer ou de calamine de laminage.

3. Procédé selon la revendication 1 ou 2, **caractérisé en ce que** le mélange contient 50 à 95 % en poids, en particulier 65 à 85 % en poids, de résidus.

4. Procédé selon l'une quelconque des revendications 1 à 3, **caractérisé en ce que** le mélange contient plus de 20 % en poids, en particulier plus de 26 % en poids, de boue de papier sèche.

5. Procédé selon l'une quelconque des revendications 1 à 4, **caractérisé en ce que** la granulométrie pour 90 % en poids des résidus dans le mélange est de moins de 1 mm.

6. Procédé selon l'une quelconque des revendications 1 à 5, **caractérisé en ce que** la granulométrie pour 90 % en poids de la boue de papier sèche et fragmentée est de moins de 1 mm.

7. Procédé selon l'une quelconque des revendications 1 à 6, **caractérisé en ce que** l'agglomération en briquettes est effectuée à une température comprise entre 90 et 250 °C, de préférence entre 90 et 150 °C.

8. Procédé selon l'une quelconque des revendications 1 à 7, **caractérisé en ce que** l'agglomération en briquettes est effectuée à une pression de 10 à 500 MPa, de préférence de 30 à 350 MPa, et de façon particulièrement préférée de 100 à 200 MPa.

9. Procédé selon l'une quelconque des revendications 1 à 8, **caractérisé en ce que** l'on ajoute au mélange comme liant supplémentaire du silicate de sodium, du phosphate d'aluminium, de la mélasse, de la lessive de sulfite usée, de l'hydroxyde de calcium et/ou de la chaux vive.

10. Procédé selon l'une quelconque des revendications 1 à 9, **caractérisé en ce que** l'on ajoute au mélange de l'aluminium, du cuivre, du manganèse, du magnésium, du silicium, du carbure de silicium, du ferrochrome, du ferromanganèse, du ferrophosphore, du ferrosilicium, du ferrosilicium-magnésium, du ferrotitane, du chrome, du nickel, du ferronickel, du molybdène, du ferromolybdène, du cobalt, du ferrocobalt, de l'oxyde de zinc, du zirconium, du tungstène, du vanadium et/ou de la poudre d'acier rapide.

11. Aggloméré en briquette, en particulier briquette ou pellet, réalisable par un procédé selon l'une quelconque des revendications 1 à 10, la teneur en boue de papier sèche (produits fibreux à base de cellulose) étant de 15 à 35 % en poids.

12. Utilisation d'agglomérés selon la revendication 11 dans le cadre de la production de l'acier, les agglomérés étant introduits dans un four électrique, en particulier un four à arc électrique, un four à induction, un convertisseur BOF/LD, un four à cuve, un cubilot, une cuve de traitement, en particulier une poche de coulée, ou un haut fourneau.
